Europäisches Patentamt

European Patent Office

Office européen des brevets

(19)

(11) EP 1 148 030 A1

(12) EUROPEAN PATENT APPLICATION
published in accordance with Art. 158(3) EPC

(43) Date of publication:
24.10.2001 Bulletin 2001/43

(51) Int Cl.7: C01G 23/053

(21) Application number: 99959701.6

(22) Date of filing: 08.12.1999

(86) International application number:
PCT/JP99/06876

(87) International publication number:
WO 00/35811 (22.06.2000 Gazette 2000/25)

(84) Designated Contracting States:
AT BE CH CY DE DK ES FI FR GB GR IE IT LI LU
MC NL PT SE

(30) Priority: 11.12.1998 JP 37508698
26.05.1999 US 136217 P

(71) Applicant: SHOWA DENKO KABUSHIKI KAISHA
Tokyo 105-8518 (JP)

(72) Inventors:
• OHMORI, Masahiro Showa Denko K.K.
Ctr. Res. Lab.
Chiba-shi Chiba 267-0056 (JP)
• KOTERA, Akihiko Showa Denko K.K.
Ctr. Res. Lab.
Chiba-shi Chiba 267-0056 (JP)

(74) Representative: Strehl Schübel-Hopf & Partner
Maximilianstrasse 54
80538 München (DE)

(54) PEROVSKITE TYPE COMPOSITE OXIDE CONTAINING TITANIUM

(57) A perovskite-type titanium-containing mixed oxide particle comprising a composition represented by formula (I) and having a specific surface area ranging from 10 to 200 $m^2/g$, the primary particles thereof having a specific surface area diameter $D_1$ defined by formula (II) ranging from 10 to 100 nm and the ratio $D_2/D_1$ between $D_1$ and the average particle size $D_2$ of the secondary particles being from 1 to 10:

$$M(TiO_3) \qquad (I)$$

(wherein M is at least one selected from Ca, Sr, Ba, Pb and Mg);

$$D_1 = 6/\rho S \qquad (II)$$

(wherein $\rho$ is the particle density and S is the specific surface area of the particles);

The perovskite-type titanium-containing mixed oxide particles of the present invention have a small particle size and excellent dispersibility and are most suitable for applications to functional materials such as dielectric materials and piezoelectric materials and to memory media and photocatalyst.

Fig. 1

20nm

**Description**

Technical Field

The present invention relates to titanium-containing mixed oxide particles, a sol thereof, a production process thereof and a film; more specifically, the present invention provides a perovskite-type titanium-containing mixed oxide fine particle having excellent dispersibility.

The present invention is based on Japanese Patent Application No. 10-375086, the contents of which are incorporated herein by reference.

Furthermore, the present application claims the benefit of U. S. Application No. 60/136,217 (filing date: May 26, 1999).

Background Art

Perovskite-type titanium-containing mixed oxides represented by barium titanate are being used in a wide range of functional materials such as dielectric materials, stacked ceramic capacitor materials, piezoelectric materials and memory media. In recent years, as electronic parts have been further reduced in size and weight, there has been demand to develop a process for obtaining a perovskite-type titanium-containing mixed oxide particle having a smaller particle size and excellent dispersibility at a low cost. Furthermore, titanium-containing mixed oxide particles having these characteristics can be expected to be used as application to photocatalysts.

Processes used to produce perovskite-type titanium-containing mixed oxides are a solid phase process of using an oxide or carbonate as a starting material, mixing the powder thereof in a ball mill or the like and reacting it at a high temperature of about 800°C or more.to produce a mixed oxide; an oxalate process of preparing an compound oxalate and thermally decomposing the compound to obtain a titanium-containing mixed oxide; an alkoxide process of using metal alkoxide as a starting material and hydrolyzing it to obtain a precursor; or a hydrothermal synthesis of reacting a starting material in a water solvent at a high temperature and high pressure to obtain a precursor. Also, a process of preparing titanium oxide or a precursor thereof, dispersing it in a solvent and compounding it with a desired element in a solution (Japanese Unexamined Patent Application, First Publication No. Hei 8-119633) and a process of using titanium tetrachloride, titanium sulfate or the like as the titanium starting material (Japanese Unexamined Patent Application, First Publication No. Sho 59-39726) are known.

The solid phase process is industrially advantageous because of its low production cost, however, the particles produced have a large and non-uniform particle size, accordingly, they are not suitable for functional materials such as dielectric materials and piezoelectric materials. The particles obtained by the oxalate process are smaller than those obtained by the solid phase process, however, they are still of the order of from 0.2 to 0.5 $\mu$m, which is too large. The alkoxide process produces particles having a particle size of approximately from 20 to 30 nm, however, due to use of an organic material as the starting material, the production cost is high. Hydrothermal synthesis is disadvantageous in that the reaction is performed at a high temperature and a high pressure, therefore, a dedicated facility is necessary and the cost increases.

Furthermore, even if particles having a small particle size are obtained by these processes, unless the particles also have good dispersibility, they coagulate in a solvent and when formed and sintered into a product, and lack satisfactory properties for functional materials such as dielectric materials and piezoelectric materials. Furthermore, among perovskite-type titanium-containing mixed oxide particles, $SrTiO_3$ in particular is expected to have photocatalytic activity, but obtaining small particles is not easy, and it has been difficult to obtain particles having excellent photocatalytic activity at a low cost.

An object of the present invention is to provide perovskite-type titanium-containing mixed oxide particles having a small particle size and excellent dispersibility at a low cost.

Disclosure of Invention

The present invention is a perovskite-type titanium-containing mixed oxide particles comprising a composition represented by formula (I) and having a specific surface area ranging from 10 to 200 m$^2$/g, the primary particles thereof having a specific surface area diameter $D_1$ defined by formula (II) ranging from 10 to 100 nm and a ratio $D_2/D_1$ between $D_1$ and the average particle size $D_2$ of the secondary particles being from 1 to 10:

$$M(TiO_3) \qquad\qquad (I)$$

(wherein M is at least one selected from Ca, Sr, Ba, Pb and Mg);

$$D_1 = 6/\rho S \qquad (II)$$

(wherein $\rho$ is the density of particles and S is the specific surface area of the particles).

The perovskite-type titanium-containing mixed oxide particles of the present invention have a small particle size and excellent dispersibility and are most suitable for applications to functional materials such as dielectric materials and piezoelectric materials and to memory media and photocatalysts.

Brief Description of Drawings

Fig. 1 is a photograph by a transmission type electron microscope of titanium oxide particles in the titanium oxide sol obtained in Example 1.

Fig. 2 is a photograph by a transmission type electron microscope of titanium oxide particles in the titanium oxide sol obtained in Comparative Example 1.

Best Mode for Carrying out the Invention

The present invention is described in detail below.

The perovskite-type titanium-containing mixed oxide particles of the present invention comprise a composition represented by formula (I) having a specific surface area ranging from 10 to 200 $m^2/g$, the primary particles thereof having a specific surface area diameter $D_1$ ranging from 10 to 100 nm and a ratio of the average particle size $D_2$ of the secondary particles to $D_1$ ranging from 1 to 10.

The specific surface area diameter $D_1$ of the primary particles can be obtained according to formula (II), wherein $\rho$ is the density of particles and S is the specific surface area of a particle measured by the BET method. The average particle diameter $D_2$ of the secondary particles is a value determined using a particle size distribution meter by dispersing the titanium-containing mixed oxide in a solvent. The particle size distribution is usually measured by the centrifugal precipitation method, the electrozone method (Coulter counter), the light scattering method or the like. Among these, the light scattering method is preferred due to its high sensitivity. The smaller the calculated value of $D_2/D_1$, the more excellent the dispersibility of particles. The value of $D_2/D_1$ cannot theoretically be less than 1 when the particle is spherical. On the other hand, if the value exceeds 10, the primary particles become poor in dispersibility and coagulate, which is disadvantageous.

The perovskite-type titanium-containing mixed oxide of the present invention has a $D_2/D_1$ ratio ranging from 1 to 10 and has excellent dispersibility of the primary particles. Further, because such particles have excellent transparency when formed into a film, they can be applied to memory media or photocatalysts. In particular $SrTiO_3$, for which M in Formula (I) is Sr, is especially suitable as a photocatalyst.

These perovskite-type titanium-containing mixed oxides are used as particles, and can also be used for sols wherein the particles are dispersed.

$$M(TiO_3) \qquad (I)$$

(wherein M is at least one selected from Ca, Sr, Ba, Pb and Mg);

$$D_1 = 6/\rho S \qquad (II)$$

The production process of the present invention is described below.

The titanium oxide particles containing brookite-type crystals for use in the present invention may be brookite-type titanium oxide alone or may contain rutile-type or anatase-type titanium oxide as long as it contains brookite-type crystals. In the case where the titanium oxide particles contain rutile-type or anatase-type titanium oxide, the proportion of the brookite-type titanium oxide in the titanium oxide is not particularly limited, however, it is preferably from 1 to 100 wt%, more preferably from 10 to 100 wt%, still more preferably from 50 to 100 wt%. This is because it favors formation of single grain particle crystals which are favorable to amorphous particles, because the former have excellent dispersibility in a solvent. Brookite-type titanium oxide in particular has better dispersibility than rutile-type or anatase-type crystals and is therefor preferable. It is not known why brookite-type titanium oxide has such excellent dispersibility, but the reason may relate to the fact that brookite-type crystals have a higher zeta potential than rutile-type or anatase-type crystals.

Examples of the production process of titanium oxide particles containing brookite-type crystal include a production process in the gaseous phase where anatase-type titanium oxide particles are heat treated to obtain titanium oxide particles containing brookite-type crystals, and a production process in the liquid phase where a solution of a titanium compound such as titanium tetrachloride, titanium trichloride, titanium alkoxide and titanium sulfate is neutralized or hydrolyzed to obtain a titanium oxide sol having dispersed therein titanium oxide particles.

The production process is not particularly limited as long as the titanium oxide particles obtained contain brookite-type crystals. When using the thus-obtained titanium oxide particles containing brookite-type crystals, a titanium-containing mixed oxide is produced, and the particles have a small particle size and excellent dispersibility. Therefore, a process of hydrolyzing a titanium salt in an acidic solution to obtain a titanium oxide sol, which was discovered by the present inventors, is preferably used. More specifically, a process of adding titanium tetrachloride to hot water at from 75 to 100°C and hydrolyzing the titanium tetrachloride at a temperature ranging from 75°C to the boiling point of the solution while controlling the chloride ion concentration to obtain titanium oxide particles containing brookite-type crystals as a titanium oxide sol (Japanese Patent Application No. Hei 9-231172) or a method of adding titanium tetrachloride to hot water at from 75 to 100°C and hydrolyzing the titanium tetrachloride in the presence of either one or both of nitrate ion and phosphate ion at a temperature ranging from 75°C to the boiling point of the solution while controlling the total concentration of chloride ions, nitrate ions and phosphate ions to obtain titanium oxide particles containing brookite-type crystals as a titanium oxide sol (Japanese Patent Application No. Sho 10-132195) is preferred.

The thus-obtained titanium oxide particles containing brookite-type crystals usually have a size of from 5 to 50 nm in terms of the specific surface area diameter of the primary particles. If the specific surface area diameter of the primary particles exceeds 50 nm, the titanium-containing mixed oxide particles produced using such titanium oxide particles have increased particle size and are not suited for functional materials such as dielectric materials or piezoelectric materials, or for memory media or photocatalysts. If it is less than 5 nm, difficulties arise in the handling during the production process for the titanium oxide particles.

When the sol of the perovskite-type titanium-containing mixed oxide particles of the present invention is manufactured, instead of using titanium oxide particles containing brookite-type particles, it is also possible to use a titanium oxide sol obtained by hydrolysis of a titanium salt in an acidic solution. If the titanium oxide sol is obtained by hydrolysis of a titanium salt in an acidic solution, the crystal type of the titanium oxide particles in the sol is not restricted.

In the case where a titanium salt such as titanium tetrachloride or titanium sulfate is hydrolyzed in an acidic solution, the reaction is restrained and proceeds at a lower rate than a reaction in a neutral or alkaline solution. As a result, the particle become single grained and the titanium oxide sol obtained exhibits excellent dispersibility. Furthermore, anions such as chloride ions and sulfate ions are not significantly incorporated into the titanium oxide particles produced, accordingly, when producing the titanium-containing mixed oxide, the incorporation of anions into the particles can be reduced. On the other hand, if hydrolysis is performed in a neutral or alkaline solution, the reaction rate is increased and a large number of nuclei are generated at an early stage. As a result, despite the small particle size, the titanium oxide sol obtained is poor in the dispersibility and the particles coagulate in cloud-like shapes. If a titanium-containing mixed oxide sol is produced starting from such a titanium oxide sol, the particles obtained are poor in dispersibility despite their small particle size. Furthermore, anions is readily incorporated into the titanium oxide particles in the sol and the anions are difficult to remove at a later stage.

The method for hydrolyzing a titanium salt in an acidic solution to obtain a titanium oxide sol is not particularly limited as long as the solution can be maintained acidic. However, a method of using titanium tetrachloride as the starting material, hydrolyzing it in a reactor equipped with a reflux condenser, inhibiting the escape of chlorine generated and thereby maintaining the solution acidic, which was discovered by the present inventors, is preferred (Japanese Patent Application No. Hei .8-230776).

The concentration of titanium salt as the starting material in the acidic solution is preferably from 0.01 to 5 mol/L. If the concentration exceeds 5 mol/L, the hydrolysis reaction rate increases, as a result, the particle size becomes large and the titanium oxide sol obtained is poor in dispersibility, whereas if it is less than 0.01 mol/L, the titanium oxide particles concentration obtained becomes low and the productivity decreases.

The metal salt containing at least one selected from Ca, Sr, Ba, Pb and Mg, for use in the production process of the present invention is not particularly limited as long as it contains one of the above-described metals. The metal salt is preferably water-soluble and usually, a nitrate, an acetate, a chloride or the like is used. One kind of metal salt may be used or two or more kinds of metal salts may be mixed in an arbitrary ratio. More specifically, in the case of Ba, barium chloride, barium nitrate, barium acetate or the like may be used, and in the case of Sr, strontium chloride, strontium nitrate, strontium acetate or the like may be used.

The process for producing a sol having dispersed therein perovskite-type titanium-containing mixed oxide particles of the present invention comprises reacting titanium oxide particles containing brookite-type crystals or a titaniumu oxide sol obtained by hydrolyzing a titanium salt in an acidic solution with a metal salt containing at least one metal selected from Ca, Sr, Ba, Pb and Mg in a liquid phase. The reaction conditions are not particularly limited but usually, the reaction is performed in an alkali solution. The pH of the solution is preferably 13.0 or more, more preferably 14.0 or more. If the pH is above 14.0, the particle size of the titanium-containing mixed oxide particles can be made small.

In order to make the liquid phase alkaline, an alkaline compound is added to the liquid phase. If an alkali metal hydroxide compound, such as lithium hydroxide, sodium hydroxide, potassium hydroxide, and the like is used as an alkaline compound, the alkali metal may remain in the titanium-containing mixed oxide particles, and when formed and sintered into a product, its characteristics as a functional material such as a dielectric material or a piezoelectric material may be degraded. Accordingly, as an alkali compound, an organic alkali compound such as ammonium tetramethyl hydroxide is preferably used. The solution is preferably prepared such that the concentration of titanium oxide particles is from 0.1 to 5 mol/L and the concentration of metal salt containing M is from 0.1 to 5 mol/L in terms of the metal oxide.

While stirring the thus-prepared alkali solution, the reaction is performed at atmospheric pressure under heating to maintain the temperature, usually at from 40 to 120°C, preferably from 80 to 120°C. The reaction time is usually 1 hour or more, preferably 4 hours or more. Then, after the end of the reaction, impurity ions are eliminated from the slurry using a method such as electrodialysis, ion exchange, washing with water, use of an osmotic membrane and the like, and the pH is made equal to or less than 10. After this, water or a water-soluble organic solvent or the like is added to the solution, and the solid content of the solution is set to a predetermined concentration. At this time, a dispersant or a film forming aid can be added to the solution. As a dispersant, polyphosphoric acid, hexametaphosphoric acid, dodecylbenzenesulphonic acid and the like can be mentioned, and as a film forming aid, alcohols such as butyl alcohol, and water soluble high polymers such as polyvinyl alcohol and methylcellulose can be used.

By eliminating the dispersion medium from the sol obtained in this way, perovskite-type titanium-containing mixed oxide particles can be obtained. To eliminate the dispersion medium, usually, filtration of the sol, centrifugation, drying or the like can be carried out. In this case, the solid can be washed with water if necessary. Further, the obtained perovskite-type titanium-containing mixed oxide particles can be calcined.

The drying is usually performed at a temperature of from room temperature to 150°C for from 1 to 24 hours. The drying atmosphere is not particularly limited but the drying is usually performed under atmospheric pressure or reduced pressure. The calcination is performed to improve the crystallinity of the titanium-containing mixed oxide and at the same time to remove the remaining impurities including anion such as chloride ion, sulfate ion and phosphate ion, and alkali compounds such as ammonium tetramethyl hydroxide. The calcination is usually performed at a temperature of from 300 to 1,000°C. The calcining atmosphere is not particularly limited but the calcination is usually performed in air.

The use of the sol of the perovskite-type titanium-containing mixed oxide particles of the present invention is not especially limited, and because these perovskite-type titanium-containing mixed oxide particles dispersed in the sol are small and have excellent dispersibility, they can also be preferably used for forming titanium-containing mixed oxide films. To form a film using a sol, first, water or a water-soluble organic solvent or the like is added to a sol wherein perovskite-type titanium-containing mixed oxide particles are dispersed if necessary, to adjust the concentration of solid in the sol. Then, the sol whose concentration of solids has been adjusted is applied onto a substrate such as a ceramic, metal, glass, plastic, paper, wood or the like. Then, the dispersion medium of the sol on the substrate is eliminated by drying, calcination is carried out if necessary, and a titanium-containing mixed oxide film can be laminated onto the substrate, a laminated product can be obtained. Because the film obtained in this way is particularly excellent in terms of transparency, it can be optimally applied to functional materials such as dielectric materials and piezoelectric materials, memory media and photocatalysts. Films of $SrTiO_3$ are especially preferable for use as a photocatalyst.

Examples

The present invention is described in greater detail below by referring to the Examples.

Example 1:

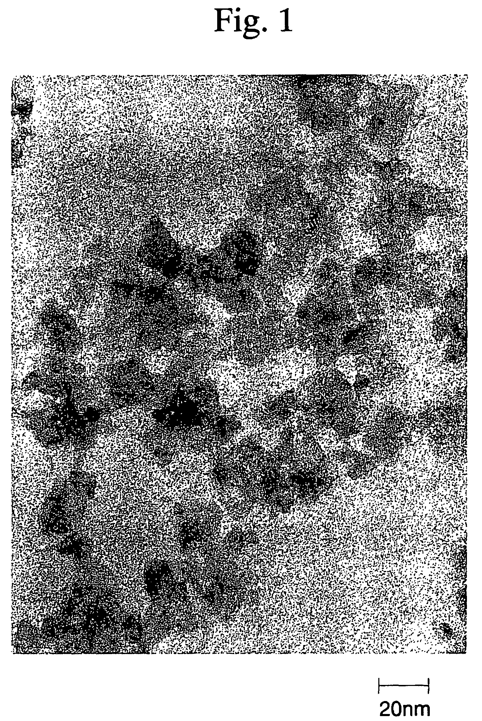

An aqueous solution having a titanium tetrachloride (purity: 99.9%) concentration of 0.25 mol/L was charged into a reactor with a reflux condenser, and heated to a temperature in the vicinity of the boiling point while preventing chloride ions from escaping and maintaining the solution acidic. At the same temperature, the titanium tetrachloride was hydrolyzed for 60 minutes to obtain a titanium oxide sol. Fig. 1 shows a photograph taken by a transmission type electron microscope of the titanium oxide sol obtained. As seen from Fig. 1, the particles in the sol are monodisperse particles having a particle size of about 15 nm. This sol was condensed by precipitation. To 320 g of the resulting sol having a titanium oxide concentration of 10 wt%, 97.7 g of barium chloride dihydrate (produced by Kokusan Kagaku K.K.) and further 600 g of ammonium tetramethyl hydroxide aqueous solution in a concentration of 20 wt% was added. After adjusting the pH to 14, the solution was stirred for 1 hour. Thereafter, the slurry was heated .to 110°C and then reacted for 4 hours while maintaining the temperature. The slurry was washed with water, filtered and dried at 150°C for 12 hours to obtain a fine particle powder.

This powder was subjected to examination by X-ray diffraction using an X-ray diffractometer manufactured by Rigaku Denka K.K. (RAD-B, rotor flex), and as a result, the powder was found to be cubic perovskite-type $BaTiO_3$. The specific surface area S determined by the BET method was 34 $m^2/g$ and the specific surface area diameter $D_1$ calculated by formula ('II) was 0.03 μm. Furthermore, the powder was dispersed in water and the average particle size $D_2$ was measured using a light scattering particle counter manufactured by Otsuka Denshi (ELS-8000) and found to be 0.21 μm. Therefore, the ratio $D_2/D_1$ was 7.0.

Example 2:

A titanium oxide sol comprising monodisperse particles having a particle size of about 8 nm was prepared in the same manner as in Example 1. Using this sol, a cubic perovskite-type $BaTiO_3$ fine particle powder was obtained in the same manner as in Example 1. This powder was examined in the same manner as in Example 1, as a result, the specific surface area S was determined to be 46 $m^2/g$, the specific surface area diameter $D_1$ was 0.02 μm, and the average particle size $D_2$ was 0.19 μm. Therefore, the ratio $D_2/D_1$ was 9.5.

Example 3:

A titanium oxide sol comprising monodisperse particles having a particle size of about 10 nm was prepared in the same manner as in Example 1 except that titanium sulfate was used in place of titanium tetrachloride and the sulfate ions were prevented from escaping, instead of the chloride ions. Using this sol, a cubic Perovskite-type $BaTiO_3$ fine particle powder was obtained in the same manner as in Example 1. This powder was examined in the same manner as in Example 1, and as a result, the specific surface area S was determined to be 40 $m^2/g$, the'specific surface area diameter $D_1$ was 0.03 μm, and the average particle size $D_2$ was 0.22 μm. Therefore, the ratio $D_2/D_1$ was 7.3.

Example 4:

A titanium oxide sol comprising monodisperse particles having a particle size of about 15 nm was prepared in the same manner as in Example 1. Using this sol, a cubic perovskite-type $SrTiO_3$ fine particle powder was obtained in the same manner as in Example 1 except that 106.7 g of strontium chloride hexahydrate was used in place of barium chloride. This powder was examined in the same manner as in Example 1, as a result, the specific surface area was determined to be 28 $m^2/g$, the specific surface area diameter $D_1$ was 0.05 μm, and the average particle size $D_2$ was 0.10 μm. Therefore, the ratio $D_2/D_1$ was 2.

Example 5 :

A titanium oxide sol comprising monodisperse particles having a particle size of about 15 nm was prepared in the same manner as in Example 1. Using this sol, a reaction was carried out in the same way as in Example 1, except that 106.7 g of strontium chloride hexahydrate was used in place of barium chloride, and a strontium titanate sol with a pH of 14 was obtained. The strontium titanate concentration of the sol was 7 wt %.

Then, after cooling this sol, electrodialysis was carried out, and 'the remaining ammonium salt, chlorine and the like were eliminated, the pH was set to 8. Electrodialysis was carried out with a Seremion ME-0 manufactured by Film Process Engineering K. K.

Then, a part of this sol was dried in a vacuum desiccator, and a powder of cubic perovskite-type $SrTiO_3$ particles was obtained. This powder was examined in the same manner as in Example 1, and the specific surface area S was found to be 29 $m^2/g$, the specific surface area diameter $D_1$ was 0.05 μm, and the average particle size $D_2$ was 0.08 μm, and therefore the ratio $D_2/D_1$ was 1.6.

Ethyl alcohol was added to the remainder of the 7 wt % strontium titanate, and after adjusting the concentration of the strontium titanate to 5 wt%, a polyvinyl alcohol film forming aid was added to the sol in an amount of 500 ppm to weight of the sol.

After the film-forming sol obtained in this way was applied to a glass plate by dip coating and dried, it was calcined at 500 °C for one hour in air, and films of strontium titanate were formed on the glass substrate, and a laminated product was obtained. The thickness of the film on the glass substrate was 0.3 μm. Further, when this film was observed by scanning electron microscopy (SEM), the particle size of the particles in the strontium titanate film was found to be 0.043 µm.

Then, the transparency and photocatalytic activity of the obtained laminated product were evaluated by the methods described below. The results are shown in Table 1. The transparency was evaluated using a hazemeter by. Tokyo Denshoku Gijutsu Center Ltd. according to the method of JIS K6718, and categorized into three grades. Further, the photocatalytic activity was judged into three grades by visual observation the degree of fading of the red color after irradiating for 30 minutes with ultraviolet irradiation using a 2.1 mW/cm² black light with a wavelength of 365 nm onto a number of drops of red ink applied to the strontium titanate film.

Table 1

|  | Transparency | Photocatalytic activity |
|---|---|---|
| Example 5 | ◎ | ◎ |
| Comparative Example 4 | X | X |

In Table 1, the symbols have the following meanings:

• Transparency

    ◎Haze rate below 2.0 %
    ○ Haze rate from 2.0 % to less than 5.0 %
    X Haze rate 5.0 % or above

• Photocatalytic activity

    ◎Satisfactory fading
    ○ Unfaded portions were present
    X No fading

Comparative Example 1:

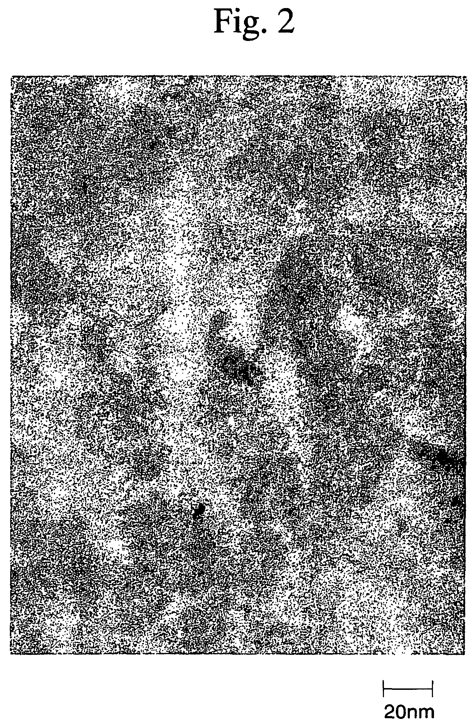

A titanium oxide sol was obtained in the same manner as in Example 1 except that a solution obtained by adding ammonium hydroxide to an aqueous solution having a titanium tetrachloride (purity: 99.9%) concentration of 2.5 mol/L and adjusted to a pH of 7 was charged into a reactor with a reflux condenser. Fig. 2 shows a photograph by a transmission type electron microscope of the titanium oxide sol obtained. As seen from Fig. 1, the primary particles in the sol were coagulated particles having a particle size of about 5 nm. Using this sol, a cubic perovskite-type $BaTiO_3$ fine particle powder was obtained in the same manner as in Example 1. This powder was examined in the same manner as in Example 1, as a result, the specific surface area S was determined to be 58 m²/g, the specific surface area diameter $D_1$ was 0.02 µm, and the average particle size $D_2$ was 0.25 µm. Therefore, the ratio $D_2/D_1$ was 12.5.

Comparative Example 2:

A cubic perovskite-type $BaTiO_3$ fine particle powder was obtained in the same manner as in Example 1 except for using 320 g of a 10 wt% aqueous solution in which a commercially available titanium sol (F-4 produced by SHOWA TITANIUM CO.,LTD., specific surface area diameter: 28 nm), as a titanium oxide, was thoroughly dispersed using ultrasonic waves. This powder was examined in the same manner as in Example 1, as a result, the specific surface area S was determined to be 28 m²/g, the specific surface area diameter $D_1$ was 0.04 µm, and the average particle size $D_2$ was 0.44 µm. Therefore, the ratio $D_2/D_1$ was 11.0.

Comparative Example 3:

To an aqueous solution having a titanium tetrachloride (purity: 99.9%) concentration of 2.5 mol/L, barium nitrate was added so as to make the concentration equimolar with respect to the titanium in the aqueous solution, and further, potassium hydroxide was added to adjust the pH to 13.5. The resulting, solution was heated while stirring to a temperature in the vicinity of the boiling point and reacted for 4 hours while maintaining the temperature. The slurry obtained was washed with water, filtered and dried at 150°C for 12 hours to obtain cubic perovskite-type $BaTiO_3$ fine particle powder. This powder was examined in the same manner as in Example 1, as a result, the specific surface area S was determined to be 28 m²/g, the specific surface area diameter $D_1$ was 0.04 µm, and the average particle size $D_2$

was 0.45 μm. Therefore, the ratio $D_2/D_1$ was 11.3.

Comparative Example 4:

To a commercially available strontium titanate (ST-HP-1 manufactured by Kyoritsu Yogyo; specific surface area of 20 $m^2/g$; $D_1$ = 0.1 μm; average particle size $D_2$ = 1.5 μm; $D_1/D_2$ = 15), water and ethyl alcohol were added, and in the same way as in Example 5, after adjusting the concentration of the strontium titanate to 5 wt%, a polyvinyl alcohol film forming aid was added in an amount of 500 ppm to weight of the sol.

Using the film forming sol obtained in this way, in the same way as in Example 5, a strontium titanate. film was formed by application to a glass plate, and a laminated product was obtained. The film on the glass substrate had a thickness of 3 μm. Further, when the film was observed by scanning electron microscopy (SEM), the particle size of the particles in the strontium titanate film was found to be 1.5 μm.

Then, the laminated product obtained in this way was evaluated for transparency and photocatalytic activity in the same way as in Example 5. The results are shown in Table 1.

As describe above, the perovskite-type titanium-containing mixed oxide particles and sol of the present invention have a small particle size and excellent dispersibility. These particles and sol can be manufactured from inexpensive titanium tetrachloride and titanium sulfate as raw materials. Furthermore, when the titanium-containing mixed oxide is strontium titanate, it has a high photocatalytic activity.

Industrial Applicability

As explained above, the perovskite-type titanium-containing mixed oxide particles of the present invention have a specific surface area of 10-200 $m^2/g$, with primary particles having a specific surface area diameter $D_1$ of 10-100 nm, and a ratio of $D_2/D_1$ between $D_1$ and the average particle size $D_2$ of the-secondary particles of 1-10, and because the particles have a small size and excellent dispersibility, they can be optimally applied to functional materials such as dielectric materials, piezoelectric materials and the like, and memory media and photocatalysts and the like.

**Claims**

1. Perovskite-type titanium-containing mixed oxide particles comprising a composition represented by formula (I) and having a specific surface area ranging from 10 to 200 $m^2/g$, a primary particle thereof having a specific surface area diameter $D_1$ defined by formula (II) ranging from 10 to 100 nm and a ratio $D_2/D_1$ between $D_1$ and an average particle size $D_2$ of secondary particles being from 1 to 10:

$$M(TiO_3) \tag{I}$$

(wherein M is at least one selected from Ca, Sr, Ba, Pb and Mg);

$$D_1 = 6/\rho S \tag{II}$$

(wherein ρ is a density of the particles and S is a specific surface area of the particles).

2. A sol wherein the perovskite-type titanium-containing mixed oxide particles according to claim 1 are dispersed.

3. A process for producing a sol comprising a dispersion of perovskite-type titanium-containing mixed oxide particles according to formula (I), wherein titanium oxide particles containing brookite-type crystals, and a metal salt containing at least one selected from Ca, Sr, Ba, Pb and Mg are reacted in a liquid phase.

$$M(TiO_3) \tag{I}$$

(wherein M is at least one selected from Ca, Sr, Ba, Pb and Mg)

4. A process for producing a sol comprising a dispersion of perovskite-type titanium-containing mixed oxide particles according to formula (I), wherein a titanium oxide sol obtained by hydrolysis of titanium salt in an acidic solution, and a metal salt comprising at least one of Ca, Sr, Ba, Pb, and Mg are reacted in a liquid phase.

$$M(TiO_3) \hspace{4cm} (I)$$

(wherein M is at least one of Ca, Sr, Ba, Pb and Mg.)

5.  A sol manufactured by the process according to claim 3 or claim 4.

6.  Perovskite-type titanium-containing mixed oxide particles obtained by elimination of a dispersant medium from the sol according to claim 5.

7.  A process for producing a sol according to claim 3 or claim 4, wherein the liquid phase is alkaline.

8.  A film formed from the sol according to claim 2.

9.  A film formed from the sol according to claim 5.

10.  A laminated product wherein the film according to claim 8 is laminated on a substrate.

11.  A laminated product wherein the film according to claim 9 is laminated on a substrate.

12.  The laminated product according to claim 10 wherein said substrate is one of a ceramic, metal, glass, plastic, paper, wood, or concrete.

13.  The laminated product according to claim 11 wherein said substrate is one of a ceramic, metal, glass, plastic, paper, wood, or concrete.

14.  Perovskite-type titanium-containing mixed oxide particles according to claim 1, wherein M is Sr.

15.  A film according to claim 8, wherein M is Sr.

16.  A film according to claim 9, wherein M is Sr.

# Fig. 1

20nm

# Fig. 2

20nm

## INTERNATIONAL SEARCH REPORT

| | International application No. |
|---|---|
| | PCT/JP99/06876 |

A. CLASSIFICATION OF SUBJECT MATTER
    Int.Cl$^7$  C01G23/053

According to International Patent Classification (IPC) or to both national classification and IPC

B. FIELDS SEARCHED

Minimum documentation searched (classification system followed by classification symbols)
    Int.Cl$^7$  C01G23/053, C01G23/04, B01J35/02

Documentation searched other than minimum documentation to the extent that such documents are included in the fields searched
    Jitsuyo Shinan Koho          1926-1996     Toroku Jitsuyo Shinan Koho  1994-2000
    Kokai Jitsuyo Shinan Koho   1971-2000     Jitsuyo Shinan Toroku Koho  1996-2000

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP, 07-277710, A (Kyowa Kagaku Kogyo K.K.), 24 October, 1995 (24.10.95), Claims; Par. No. [0008]; example    (Family: none) | 1,2,14 |
| X | JP, 07-291607, A (Murata MFG. Co., Ltd.), 07 November, 1995 (07.11.95), Claims; Par. Nos. [0025], [0038]    (Family: none) | 1,2,4,5,6,7,14 |
| X | JP, 06-305729, A (Chitan Kogyo K.K.), 01 November, 1994 (01.11.94), Claims; Par. No. [0002]; example    (Family: none) | 4-7,9,11, 13,16 |
| PX | JP, 11-228139, A (Toyota Central Research and Development Laboratories, Inc.), 24 August, 1999 (24.08.99), Claims; Par. No. [0002]; example    (Family: none) | 4-7,9,11, 13,16 |
| X | JP, 07-069635, A (Chitan Kogyo K.K.), 14 March, 1995 (14.03.95), Claims; Par. Nos. [0002] to [0005], [0013]; example (Family: none) | 4-7,9,11, 13,16 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 February, 2000 (23.02.00) | 07 March, 2000 (07.03.00) |

| Name and mailing address of the ISA/ | Authorized officer |
|---|---|
|     Japanese Patent Office | |
| Facsimile No. | Telephone No. |

Form PCT/ISA/210 (second sheet) (July 1992)

**EP 1 148 030 A1**

## INTERNATIONAL SEARCH REPORT

International application No.

PCT/JP99/06876

C (Continuation).   DOCUMENTS CONSIDERED TO BE RELEVANT

| Category* | Citation of document, with indication, where appropriate, of the relevant passages | Relevant to claim No. |
|---|---|---|
| A | JP, 10-298769, A (Kansai Shin Gijutsu Kenkyusho K.K.), 10 November, 1998 (10.11.98), Claims; example   (Family: none) | 1-16 |
| A | JP, 10-286537, A (Toto Ltd.), 27 October, 1998 (27.10.98), Claims; Par. No. [0008]; example   (Family: none) | 1-16 |

Form PCT/ISA/210 (continuation of second sheet) (July 1992)

13